# EUROPEAN PATENT APPLICATION

(11) **EP 4 365 147 A1**
(43) Date of publication of application: **08.05.2024**
(21) Application number: 22205456.1
(22) Date of filing: 04.11.2022
(51) Int. Cl.: C04B 35/00, C04B 35/626, C04B 38/00, F01D 5/28, C23C 4/04

(54) **POWDER MIXTURE, COATING WITH HIGHER FRACTION OF COARSE POROSITY, COMPONENT AND METHOD**

(71) Applicant: Siemens Energy Global GmbH & Co. KG, 81739 München (DE)
(72) Inventor: Sharma, Atin, Pennington, 08534 (US)

(57) **Abstract**

The invention claims a ceramic powder, which comprises a mixture of porous and spherical/spheroidal grains and blocky and dense grains powder for ceramic coatings.

## Description

The invention relates to a powder mixture, a coating with higher fraction of coarse porosity, component and a method.

Thermal barrier coatings (TBCs) with higher porosity offer lower thermal conductivity and higher strain compliance. These properties are desirable for gas turbine engines.

One of the common methods of manufacturing TBC's is thermal plasma spraying.

For advanced TBC's manufactured by thermal spraying, the use of feedstock powder produced via agglomeration and sintering (A&S) manufacturing route has increasingly become popular. In general, in thermal spraying, manufacturing of high porosity TBCs often requires hindering melting of a fraction of powder particles to help reduce the particle flattening and increase creation of porosity due to shadowing effect. This requires selection of a set of process parameters that would help reduced the temperature of at least a fraction of powder particles below their melting point. This is done either by reducing the input enthalpy of the process or by increasing the particle velocity (reducing dwell time) through the plasma plume. There are several process parameters such as plasma torch power, primary and secondary gases, powder feed rate, and torch stand-off distance etc. commonly known in the art that can be adjusted to achieve the desired outcome above.

In the above method, mostly the larger particles from the powder feedstock tend to stay unmolten during the process and get incorporated in the TBC in their (almost) original manufactured state.

Some advanced TBC materials are highly sintering resistant and cannot easily be sintered well to the desired level during the A&S manufacturing process. The entrapment of such large, weakly sintered particles helps create porosity in TBC but at the same time creates some issues:
1. Lower erosion resistance in as-sprayed TBC due to the entrapment of insufficiently sintered original agglomerates and resulting from the breakage of the original agglomerates.
2. A large portion of the total porosity of the TBC is made of fine pores (in the original powder agglomerates and the fines/dust created by the breakage of the weak agglomerates) The fine pores are not desirable since the fine pores tend to close due to sintering during engine operation resulting in reduced strain compliance and increased thermal conductivity of the TBC. Both of these changes in TBC properties are undesirable and ultimately lead to early TBC failure.

One method of solving this issue involves adjustment of powder particle size to increase the fraction of coarser particles in the powder feedstock.

Another method is to adjust the coating process parameters so as to reduce the average particle temperature. These methods effectively increase the portion of unmelts in the coating which results in the creation of pores.

Another method is the use of pore formers (e.g., polymers) during the coating process in the powder feedstock.

While the TBC microstructure resulting with this method is suitable and necessary for some applications (e.g., abradables), the process is not economically viable for manufacturing of TBC and the erosion resistance of such coatings is poor.

Therefore, a solution is needed to increase the fraction of coarse porosity in TBC's without adversely affecting its mechanical integrity.

The problem is solved by a powder according to claim 1, a coating according to claim 6, a component according to claim 7 and a method according to claim 8.

In the dependent claims further advantages are listed which can be combined arbitrarily with each other to yield further advantages.

It is shown by
Figures 1, 8, 9 undesired microstructures
figure 2, 7 desired microstructures
figures 3, 4 an A&S powder
figure 5, 6 a F&C powder.

The description and figures disclose only exemplary examples of the invention.

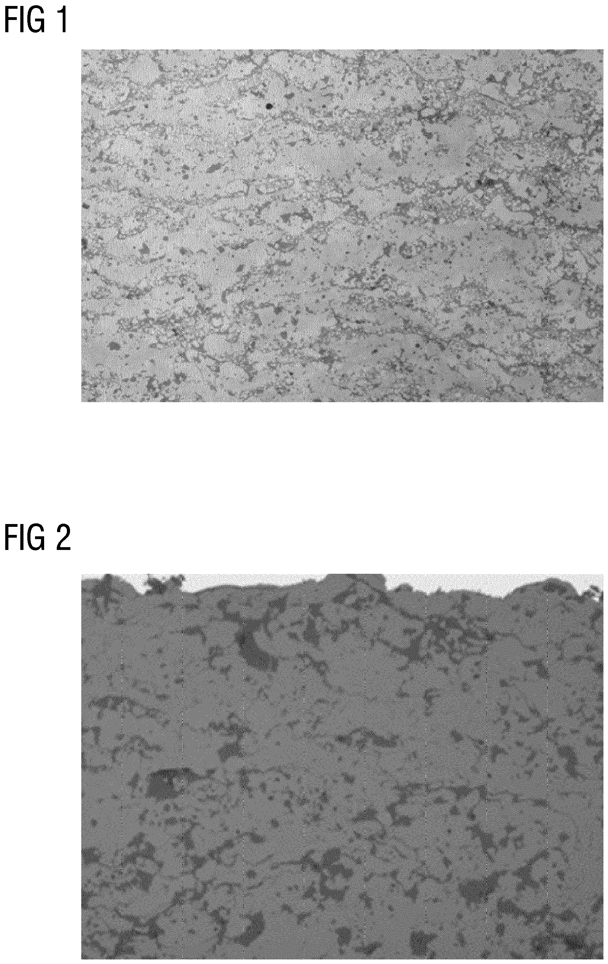

Figure 1 shows an example for unacceptable microstructure with high fraction of porosity from incomplete molten particles as well as entrapped fine particles (dust) and layering.

Figure 2 shows an example for desired microstructure for a typical TBC with high homogenous porosity.

The invention suggests the use of a different powder feedstock to generate coarse porosity without compromising the coating integrity.

A smaller portion of a coarse cut of Fused and Crushed (F&C) powder preferably of the same chemical composition is to be blended in the (main) A&S powder feedstock before spraying.

The F&C powder is made by first melting the material of the intended chemistry in an arc furnace, solidified, crushed and then classified to desired size range for coating application. The resulting powder particles are blocky, fully dense and have angular morphology. Most coating applications utilize only fine portions (-45 µm) of such powder to generate very dense (and segmented) TBC's.

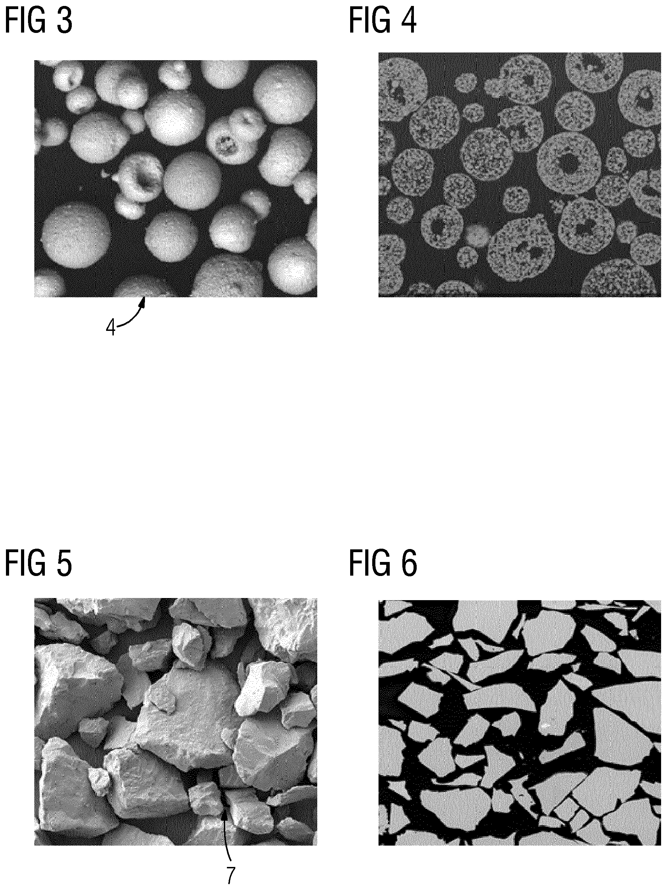

Figure 3 shows the outer morphology of A&S powder particles 4, wherein figure 4 shows the inner structure of these particles shown in figure 3, which is porous and partially hollow.

Figure 5 shows the outer blocky morphology of F&C powder particles 7, whereas figure 6 shows the inner structure of these particles shown in figure 5, which is dense.

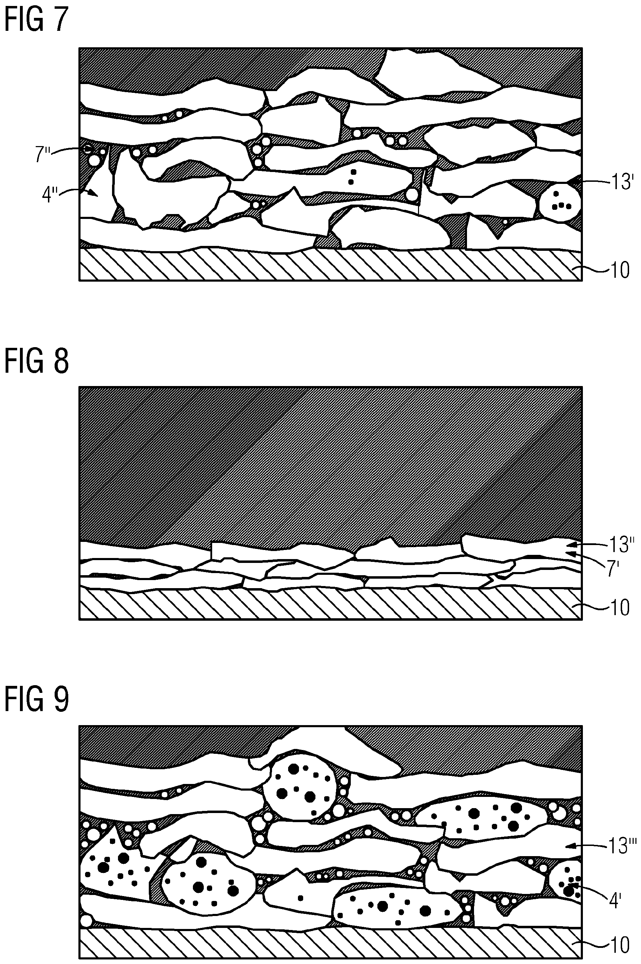

Figure 8 shows a TBC 13" on a substrate 10 or onto a NiCoCrAlY coating wherein F&C powder 7 is used which leads to low porosity and therefore to undesirable high thermal conductivity.

Figure 9 shows a TBC 13‴ wherein A&S powder 4 is used which leads to fine pores inside of the molten or semimolten powder particles 4'.

A F&C powder particle, due to its higher density requires more thermal energy to melt compared to a same size particle of the same chemical composition, made via A&S method. Therefore, when spraying a primarily A&S powder feedstock in which a small percentage of large size F&C particles are mixed in results in the large F&C particles remaining mostly unmolten or semimolten as these particles make it to the coating. Since the F&C particles are originally angular shaped (unlike the A&S particles which are spherical/spheroidal), they create significant shadowing effects for subsequently deposited particles (splats), thereby creating large pores.

Unlike the A&S particles, the unmolten F&C particles have high strength, and these don't break down to create fines/dust since the particles are fully fused. In contrast to A&S particles, the F&C particles do not have fine pores in the initial state.

The result of this method is a coating with higher fraction of large pores and well melted/resolidified ceramic microstructure around the pores. Such coating will have a better erosion resistance in the as-sprayed conditions and higher sintering resistance during engine operation.

A schematic microstructure of TBC 13' resulting from using this powder mixture 4, 7 is shown in figure 7.
1. Coarser pores created mostly by the shadow effect of the asperities on the deposited surface (enhanced by the presence of some unmolten F&C particles)
2. No fine porosity since the F&C particles do not have fine pores in the initial state.
3. Reduced entrapped dust (F&C particles don't break down to create fines/dust since the particles are fully fused.
4. Coating deposition rate is very similar to the baseline (A&S) → no debit on the coating process efficiency

The fraction of F&C in the blend can be as high as 50% in principle, but the preferred amount is 5%-20%.

### Preferred grain sizes (range) of A&S powder are -150µm + 38µm (90% of particles in 38µm - 150µm range)

Exemplary grain size distribution for A&S powder:
Example 1: D₉₀ = 145 µm, D₅₀ = 95 µm, D₁₀ = 60 µm

### Preferred grain sizes (range) of F&C powder are -125µm + 45µm (90% of particles in 45µm - 125µm range)

Exemplary grain size distribution for F&C powder:
Example 1: D₉₀ = 125 µm, D₅₀ = 75 µm, D₁₀ = 53 µm
Example 2: D₉₀ = 90 µm, D₅₀ = 45 µm, D₁₀ = 38 µm

## Claims

1. Ceramic powder,
which comprises a mixture of
porous and spherical/spheroidal grains,
especially a A&S ceramic powder and
blocky and dense grains,
especially a F&C ceramic powder.

2. Ceramic powder according to claim 1,
wherein the amount of the blocky and dense grained powder is lower than 50%,
especially 5% to 20%.

3. Ceramic powder according to claim 1,
wherein the ceramic
of the porous and spherical/spheroidal grained ceramic powder and
blocky and dense grained ceramic powder is the same.

4. Ceramic powder according to claim 2,
wherein the ceramic
of the porous and spherical/spheroidal grained ceramic powder and
blocky and dense grained ceramic powder is the same.

5. Ceramic powder according to claim 1,
wherein the grain sizes of the porous and spherical/spheroidal grained ceramic powder is -150µm + 38µm, which means that 90% of particles are in a 38µm - 150µm range.

6. Ceramic powder according to claim 3,
wherein the grain sizes of the porous and spherical/spheroidal grained ceramic powder is -150µm + 38µm, which means that 90% of particles are in a 38µm - 150µm range.

7. Ceramic powder according to claim 4,
wherein the grain sizes of the porous and spherical/spheroidal grained ceramic powder is -150µm + 38µm, which means that 90% of particles are in a 38µm - 150µm range.

8. Ceramic powder according to claim 1,
wherein the grain sizes of the blocky and dense grained ceramic powder is -125µm + 45µm,
which means that 90% of particles are in 45µm - 125µm range.

9. Ceramic powder according to claim 2,
wherein the grain sizes of the blocky and dense grained ceramic powder is -125µm + 45µm,
which means that 90% of particles are in 45µm - 125µm range.

10. Ceramic powder according to claim 3,
wherein the grain sizes of the blocky and dense grained ceramic powder is -125µm + 45µm,
which means that 90% of particles are in 45µm - 125µm range.

11. Coating produced by a thermal spraying using one powder feed stock having a ceramic powder according to one of the claims 1 to 10.

12. Component comprises a substrate,
especially a nickel based superalloy.
and a coating according to claim 11.

13. Method to produce a coating according to claim 11, wherein a thermal spraying is used.
